# EUROPEAN PATENT APPLICATION

(11) **EP 4 293 953 A1**
(43) Date of publication of application: **20.12.2023**
(21) Application number: 22752155.6
(22) Date of filing: 27.01.2022
(51) Int. Cl.: H04L 9/08

(54) **PC5 ROOT KEY PROCESSING METHOD AND APPARATUS, AND AUSF AND REMOTE TERMINAL**

(30) Priority: 10.02.2021 CN 202110184930
(71) Applicant: Datang Mobile Communications Equipment Co., Ltd., Beijing 100085 (CN)
(72) Inventor: ZHOU, Wei, Beijing 100085 (CN)
(74) Representative: Studio Torta S.p.A.
(86) International application number: PCT/CN2022/074372
(87) International publication number: WO 2022/170994

(57) **Abstract**

The present disclosure provides a PCS root key processing method, device, AUSF and remote terminal. The method includes: receiving, at AUSF, a relay key request message transmitted by a relay terminal; obtaining a PCS root key of the remote terminal, according to the relay key request message; generating a first random number, and generating a relay key according to the first random number and the PCS root key; and transmitting a relay key response message to the relay terminal through the target network element of the relay terminal.

## Description

### CROSS-REFERENCE TO RELATED APPLICATION

This application claims the priority of Chinese Application No. 202110184930.7, filed on February 10, 2021, the disclosure of which is incorporated in its entirety by reference herein.

### TECHNICAL FIELD

The present disclosure relates to the field of communication technologies, and in particular to a PCS interface root key processing method, device, AUSF and a remote terminal.

### BACKGROUND

5G proximity service (ProSe) system is currently being developed, which means that user data can be directly transmitted between terminals without being transferred through the network. Since the 5G network architecture is different from the 4G network architecture and functions supported by the 5G ProSe system are also different from those of 4G ProSe, the security technology of UE-to-Network Relay in the 4G ProSe is not applicable to the 5G ProSe system.

Currently, two technical solutions are provided in the 5G ProSe security research.

A first technical solution: every time a remote user equipment (Remote UE) registers to the network, a PCS communication key is newly generated. The key is generated by an access and mobility management function (AMF) based on an AMF key.

A second technical solution: an authentication server function (AUSF) generates a key identifier for a remote UE, and then generates a relay key according to a request when PCS communication is required.

For the first technical solution, since generation of PCS key is required every time the UE registers, the efficiency is low, and the roaming scenario solution is incomplete. Generating keys in AMF is not as reasonable as generating keys in AUSF.

For the second technical solution, the scenario where the remote UE uses a subscription concealed identifier (SUCI) is not considered, and routing relationship is complicated and impractical. Further, this technical solution does not have concept of a root key.

### SUMMARY

An object of embodiments of the present disclosure is to provide a PCS interface root key processing method, device, AUSF and a remote terminal, which can solve the problem of low efficiency or lack of concept of root keys in the 5G ProSe security technology in related art.

In order to solve the above technical solution, one embodiment of the present disclosure provides a PCS root key processing method, including:
receiving, at an authentication server function (AUSF) of a remote terminal, a relay key request message transmitted by a relay terminal through a target network element of the relay terminal;
obtaining, by the AUSF, a PCS root key of the remote terminal, according to the relay key request message;
generating, by the AUSF, a first random number, and generating a relay key for secure communication between the relay terminal and the remote terminal according to the first random number and the PCS root key; and
transmitting, by the AUSF, a relay key response message to the relay terminal through the target network element of the relay terminal; wherein the relay key response message includes: the relay key and the first random number.

In case that the relay key request message includes an identifier of the PCS root key, the obtaining, by the AUSF, a PCS root key of the remote terminal, according to the relay key request message, includes:
transmitting, by the AUSF, a first request message to a unified data management (UDM); wherein the first request message includes: a subscription permanent identifier (SUPI) of the remote terminal and the identifier of the PCS root key;
receiving, by the AUSF, a first response message transmitted by the UDM; wherein the first response message includes: the PCS root key corresponding to the identifier of the PCS root key.

In case that the relay key request message does not include an identifier of the PCS root key, or, the AUSF determines to update the PCS root key of the remote terminal, the obtaining, by the AUSF, a PCS root key of the remote terminal, according to the relay key request message, includes:
generating, by the AUSF, the PCS root key and an identifier of the PCS root key, based on an AUSF key of the remote terminal;
wherein the relay key response message further includes the identifier of the PCS root key.

After generating, by the AUSF, the PCS root key and an identifier of the PCS root key, based on an AUSF key of the remote terminal, the method further includes:
transmitting, by the AUSF, the PCS root key and the identifier of the PCS root key to a unified data management (UDM) of the remote terminal for storage by the UDM of the remote terminal.

The generating, by the AUSF, the PCS root key and an identifier of the PCS root key, based on an AUSF key of the remote terminal, includes:
generating, by the AUSF, a second random number, and generating the PCS root key and the identifier of the PCS root key according to the second random number and the AUSF key of the remote terminal;
   or,
generating, by the AUSF, a second random number, and generating the PCS root key and the identifier of the PCS root key according to the second random number, the AUSF key of the remote terminal and a third random number generated by the remote terminal.

The method further includes:
generating a message authentication code (MAC) for integrity protection of PCS root key generation information, by using the PCS root key or a derived key of the PCS root key;
wherein the relay key response message further includes: the message authentication code; or, the relay key response message further includes: the message authentication code and a parameter required for generating the message authentication code.

In case that the relay key request message includes the identifier of the PCS root key,
before receiving, at an authentication server function (AUSF) of a remote terminal, a relay key request message transmitted by a relay terminal through a target network element of the relay terminal, the method further includes:
receiving, by the AUSF, a PCS root key request message transmitted by the remote terminal through a network element which the remote terminal accesses;
performing, by the AUSF, an authorization check on the remote terminal according to the PCS root key request message;
in case of determining that the remote terminal is an authorized remote terminal, generating, by the AUSF, a PCS root key and an identifier of the PCS root key based on an AUSF key of the remote terminal;
transmitting, by the AUSF, a PCS root key response message to the remote terminal through the network element which the remote terminal accesses; wherein the PCS root key response message includes the PCS root key generation information, and the PCS root key generation information includes a parameter required for generating the PCS root key and the identifier of the PCS root key.

The obtaining, by the AUSF, a PCS root key of the remote terminal, according to the relay key request message, includes:
performing, by the AUSF, an authorization check on the remote terminal according to the relay key request message;
in case of determining that the remote terminal is an authorized remote terminal, obtaining, by the AUSF, the PCS root key of the remote terminal.

The relay key request message includes: a subscription permanent identifier (SUPI) of the remote terminal, or a subscription concealed identifier (SUCI) of the remote terminal.

One embodiment of the present disclosure further provides a PCS root key processing method, including:
transmitting, by a remote terminal, a direct communication key request message to a relay terminal;
receiving, by the remote terminal, a direct communication key response message fed back by the relay terminal; wherein the direct communication key response message includes a first random number used by an AUSF of the remote terminal to generate a relay key; and
generating, by the remote terminal, the relay key for secure communication between the relay terminal and the remote terminal, according to the first random number and the PCS root key.

In case that the remote terminal stores the PCS root key and an identifier of the PCS root key, the direct communication key request message includes the identifier of the PCS root key.

In case that the remote terminal does not store the PCS root key and an identifier of the PCS root key, the direct communication key response message further includes PCS root key generation information; the PCS root key generation information includes a parameter required for generating the PCS root key and the identifier of the PCS root key;
the method further includes:
generating, by the remote terminal, the PCS root key, according to an AUSF key of the remote terminal and the parameter required for generating the PCS root key.

The parameter required for generating the PCS root key includes: a second random number used by the AUSF to generate the PCS root key;
the generating, by the remote terminal, the PCS root key, according to an AUSF key of the remote terminal and the parameter required for generating the PCS root key, includes:
generating the PCS root key according to the AUSF key of the remote terminal and the second random number;
   or,
generating the PCS root key according to the AUSF key of the remote terminal, the second random number and a third random number generated by the remote terminal.

The relay key response message further includes a message authentication code (MAC), or, the relay key response message further includes: the message authentication code and a parameter required for generating the message authentication code; the message authentication code is used for integrity protection of the PCS root key generation information.

In case that the remote terminal stores the PCS root key and an identifier of the PCS root key, before transmitting, by a remote terminal, a direct communication key request message to a relay terminal, the method further includes:
transmitting, by the remote terminal, a PCS root key request message, to an AUSF of the remote terminal, through a network element which the remote terminal accesses;
receiving, by the remote terminal, a PCS root key response message fed back by the AUSF through the network element which the remote terminal accesses; wherein the PCS root key response message includes PCS root key generation information, and the PCS root key generation information includes a parameter required for generating the PCS root key and the identifier of the PCS root key;
generating, by the remote terminal, the PCS root key according to the AUSF key of the remote terminal and the parameter required for generating the PCS root key.

The direct communication key request message includes SUCI of the remote terminal, or a globally unique temporary UE identity (GUTI) of the remote terminal.

One embodiment of the present disclosure further provides a PCS root key processing device, applied to an authentication server function (AUSF) of a remote terminal, including:
a first receiving unit configured to receive a relay key request message transmitted by a relay terminal through a target network element of the relay terminal;
a first obtaining unit configured to obtain a PCS root key of the remote terminal, according to the relay key request message;
a first generation unit configured to generate a first random number, and generate a relay key for secure communication between the relay terminal and the remote terminal according to the first random number and the PCS root key;
a first transmission unit configured to transmit a relay key response message to the relay terminal through the target network element of the relay terminal; wherein the relay key response message includes: the relay key and the first random number.

In case that the relay key request message does not include an identifier of the PCS root key, or, the AUSF determines to update the PCS root key of the remote terminal, the first obtaining unit includes:
a third subunit configured to generate the PCS root key and an identifier of the PCS root key, based on an AUSF key of the remote terminal;
wherein the relay key response message further includes the identifier of the PCS root key.

The relay key request message includes: a subscription permanent identifier (SUPI) of the remote terminal, or a subscription concealed identifier (SUCI) of the remote terminal.

One embodiment of the present disclosure further provides an authentication server function (AUSF), including: a memory, a transceiver and a processor; wherein the memory is used to store a computer program, the transceiver is used to transmit and receive data under the control of the processor, and the processor is used to read the computer program in the memory and perform the following operations:
receiving a relay key request message transmitted by a relay terminal through a target network element of the relay terminal;
obtaining a PCS root key of the remote terminal, according to the relay key request message;
generating a first random number, and generating a relay key for secure communication between the relay terminal and the remote terminal according to the first random number and the PCS root key; and
transmitting a relay key response message to the relay terminal through the target network element of the relay terminal; wherein the relay key response message includes: the relay key and the first random number.

One embodiment of the present disclosure further provides a PCS root key processing device, applied to a remote terminal, including:
a second transmission unit configured to transmit a direct communication key request message to a relay terminal;
a second receiving unit configured to receive a direct communication key response message fed back by the relay terminal; wherein the direct communication key response message includes a first random number used by an AUSF of the remote terminal to generate a relay key;
a second generation unit configured to generate the relay key for secure communication between the relay terminal and the remote terminal, according to the first random number and the PCS root key.

The direct communication key request message includes SUCI of the remote terminal, or a globally unique temporary UE identity (GUTI) of the remote terminal.

One embodiment of the present disclosure further provides a remote terminal, including: a memory, a transceiver and a processor; wherein the memory is used to store a computer program, the transceiver is used to transmit and receive data under the control of the processor, and the processor is used to read the computer program in the memory and perform the following operations:
transmitting a direct communication key request message to a relay terminal;
receiving a direct communication key response message fed back by the relay terminal; wherein the direct communication key response message includes a first random number used by an AUSF of the remote terminal to generate a relay key; and
generating the relay key for secure communication between the relay terminal and the remote terminal, according to the first random number and the PCS root key.

One embodiment of the present disclosure further provides a processor-readable storage medium, including a computer program stored thereon; wherein the computer program is used to cause a processor to execute the above method.

The above technical solution of the present disclosure has at least the following beneficial effects.

According to the PCS interface root key processing method, device, AUSF and the remote terminal in the embodiments of the present disclosure, the PCS root key is generated by the AUSF of the remote terminal, that is, after the AUSF completes authentication of the remote terminal, the AUSF generates the PCS root key by using the AUSF key of the remote terminal, which is in line with the positioning of the AUSF in the 5G system. The PCS root key generated by the AUSF is stored in the UDM, and the entity that needs the PCS root key can use the identifier of the PCS root key to obtain the PCS root key through the AUSF, without having to regenerate a PCS root key every time, thereby improving system efficiency.

### BRIEF DESCRIPTION OF THE DRAWINGS

FIG. 1 is a first flow chart of a PCS root key processing method according to an embodiment of the present disclosure;
FIG. 2 is a schematic diagram showing interaction of a remote UE directly accessing the network to obtain a PCS root key in advance in the PCS root key processing method according to an embodiment of the present disclosure;
FIG. 3 is a second flow chart of a PCS root key processing method according to an embodiment of the present disclosure;
FIG. 4 is a schematic diagram showing interaction of an application example of the PCS root key processing method according to an embodiment of the present disclosure;
FIG. 5 is a first block diagram of a PCS root key processing device according to an embodiment of the present disclosure;
FIG. 6 is a block diagram of an AUSF according to an embodiment of the present disclosure;
FIG. 7 is a second block diagram of a PCS root key processing device according to an embodiment of the present disclosure; and
FIG. 8 is a block diagram of a remote UE according to an embodiment of the present disclosure.

### DETAILED DESCRIPTION

In order to make technical problems to be solved, technical solutions and advantages of the present disclosure more apparent, detailed description will be provided hereinafter in conjunction with the accompanying drawings and embodiment.

The terms "and/or" in the embodiments of the present disclosure are used to describe association relationship between associated objects, and indicate that there may be three relationships, for example, A and/or B means there are three situations, i.e., there is A alone, there are both of A and B, or, there is B alone. The character "/" generally means that relationship between associated objects before and after the character "/" is "or".

The term "plurality" in the embodiments of the present disclosure means two or more, and other quantifiers are similar.

The technical solutions in the embodiments of the present disclosure will be described hereinafter in a clear and complete manner in conjunction with the accompanying drawings of the embodiments of the present disclosure. Obviously, the following embodiments are merely a part of, rather than all of, the embodiments of the present disclosure, and based on these embodiments, a person skilled in the art may obtain the other embodiments, which also fall within the scope of the present disclosure.

The technical solutions provided in the embodiments of the present disclosure may be applicable to various systems, especially the fifth generation communication (5G) system. For example, applicable systems may be global system of mobile communication (GSM) system, code division multiple access (CDMA) system, wideband code division multiple access (WCDMA) general packet wireless service (GPRS) system, long term evolution (LTE) system, LTE frequency division duplex (FDD) system, LTE time division duplex (TDD) system, long term evolution advanced (LTE-A) system, universal mobile telecommunication system (UMTS), worldwide interoperability for microwave access (WiMAX) system, 5G new radio (NR) system, etc. Each of the various systems includes a user equipment and a network device. The system may further include a core network part, such as an evolved packet system (EPS), a 5G system (SGS).

A remote terminal and/or relay terminal involved in the embodiments of the present disclosure may be a device that provides voice and/or data connectivity to a user, a handheld device with a wireless connection function, or other processing device coupled to a wireless modem. In different systems, names of the remote terminal and/or relay terminal may be different. For example, in the 5G system, the remote terminal and/or relay terminal may be referred as user equipment (UE). A wireless terminal device may communicate with one or more core networks (CN) via a radio access network (RAN). The wireless terminal device may be a mobile terminal device such as a mobile phone (or referred as cell phone), or a computer with a mobile terminal device, such as a portable, pocket-sized, handheld, computer built-in or vehicle-mounted mobile device, which exchange language and/or data with wireless access networks, for example, a personal communication service (PCS) phone, a cordless phone, a session initiated protocol (SIP) phone, a wireless local loop (WLL) station, a personal digital assistant (PDA) and other device. The wireless terminal device may also be referred to as system, subscriber unit, subscriber station, mobile station, mobile, remote station, access point, remote terminal, access terminal, user terminal, user agent, or user device, which are not limited in the embodiments of the present disclosure.

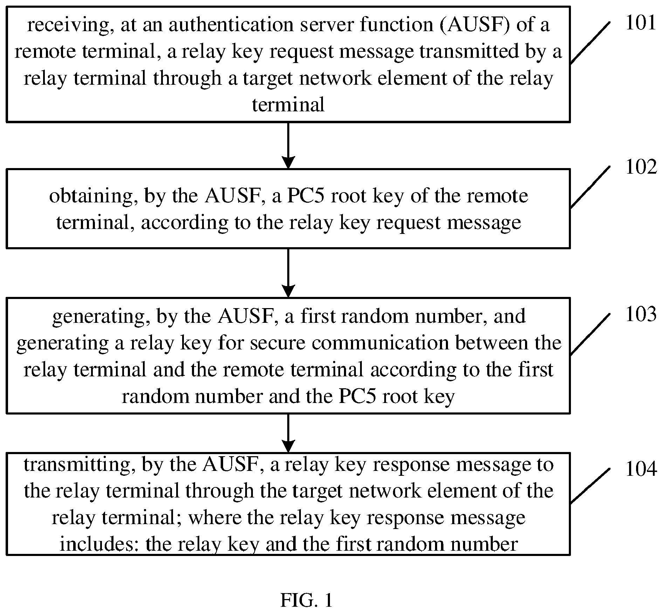

As shown in FIG. 1, one embodiment of the present disclosure provides a PCS root key processing method, which includes the following steps.

Step 101: receiving, at an authentication server function (AUSF) of a remote terminal, a relay key request message transmitted by a relay terminal through a target network element of the relay terminal.

In this step, in case that the remote terminal needs to perform PCS communication with the relay terminal, the remote terminal transmits a direct communication key request message to the relay terminal; and the relay terminal that receives the direct communication key request message, transmits a relay key request message to the AUSF through the target network which the relay terminal accesses. PCS is a direct communication interface between terminals.

Step 102: obtaining, by the AUSF, a PCS root key of the remote terminal, according to the relay key request message; where the PCS root key may also be referred as a root key of a PCS interface between the remote terminal and the relay terminal. The PCS root key is used to assist in generating a relay key between the remote terminal and the relay terminal.

Step 103: generating, by the AUSF, a first random number, and generating a relay key for secure communication between the relay terminal and the remote terminal according to the first random number and the PCS root key.

In this step, when AUSF generates the relay key, in addition to using the first random number and the PCS root key, a third random number generated by the remote terminal and/or a relay service code of the remote terminal may also be used in combination. In case that the AUSF can obtain the third random number and/or the relay service code, the AUSF generates the relay key according to the first random number, the PCS root key, the third random number and the relay service code.

Step 104: transmitting, by the AUSF, a relay key response message to the relay terminal through the target network element of the relay terminal; where the relay key response message includes: the relay key and the first random number.

The target network element of the relay terminal may be AMF of the relay terminal, or the AMF of the relay terminal and a ProSe key management function (PKMF) of the relay terminal. The PKMF communicates with the AUSF of the remote terminal via the AMF.

Further, in the above embodiment of the present disclosure, after the relay terminal receives the relay key response message, the relay terminal transmits the first random number used for generating the relay key to the remote terminal through a direct security mode command. The remote terminal uses the PCS root key and the first random number to generate a relay key in the same way as AUSF, so that PCS secure communication can be realized between the relay terminal and the remote terminal based on the above relay key.

In at least one embodiment of the present disclosure, if the remote terminal already has a PCS root key, the direct communication key request message may carry an identifier (PCS key ID) of the PCS root key, correspondingly, the relay key request message carries the identifier of the PCS root key; if the remote terminal does not have the PCS root key, the direct communication key request message cannot carry the identifier of the PCS root key, correspondingly, the relay key request message also cannot carry the identifier of the PCS root key.

As an optional embodiment, in case that the relay key request message includes the identifier of the PCS root key, the step 102 includes:
transmitting, by the AUSF, a first request message to a unified data management (UDM); where the first request message includes: SUPI of the remote terminal and an identifier of the PCS root key;
receiving, by the AUSF, a first response message transmitted by the UDM; where the first response message includes: the PCS root key corresponding to the identifier of the PCS root key.

In other words, if the remote terminal provides the identifier of the PCS root key and the network determines that there is no need to update the PCS root key of the remote terminal, the AUSF requests the PCS root key corresponding to the identifier of the PCS root key from the UDM, and the UDM obtains the specified PCS root key and returns the specified PCS root key to the AUSF.

In the embodiment of the present disclosure, the PCS root key generated by the AUSF is stored in the UDM, and an entity that needs the PCS root key can use the identifier of the PCS root key to obtain the PCS root key through the AUSF, without having to regenerate a PCS root key every time, thereby improving system efficiency.

As another optional embodiment, in case that the relay key request message does not include the identifier of the PCS root key, or, the AUSF determines to update the PCS root key of the remote terminal (even if the relay key request message includes the identifier of the PCS root key, the AUSF may also determine not to use the PCS root key corresponding to the identifier of the PCS root key. i.e., updating the PCS root key of the remote terminal), the step 102 includes:
generating, by the AUSF, a PCS root key and an identifier of the PCS root key, based on an AUSF key of the remote terminal;
where the relay key response message further includes the identifier of the PCS root key.

For example, a parameter required for generating the PCS root key includes: a random number generated by the AUSF for generating the PCS root key.

Optionally, the generating, by the AUSF, a PCS root key and an identifier of the PCS root key, based on an AUSF key of the remote terminal, includes:
generating, by the AUSF, a second random number, and generating a PCS root key and an identifier of the PCS root key according to the second random number and the AUSF key of the remote terminal;
   or,
generating, by the AUSF, a second random number, and generating a PCS root key and an identifier of the PCS root key according to the second random number, the AUSF key of the remote terminal and a third random number generated by the remote terminal.

Further, after generating, by the AUSF, a PCS root key and an identifier of the PCS root key, based on an AUSF key of the remote terminal, the method further includes:
transmitting, by the AUSF, the PCS root key and the identifier of the PCS root key to the UDM of the remote terminal for storage by the UDM of the remote terminal.

In other words, every time the AUSF generates a PCS root key and an identifier of the PCS root key, the newly generated PCS root key and the identifier of the PCS root key are stored in the UDM. An entity that needs the PCS root key can use the identifier of the PCS root key to obtain the PCS root key through the AUSF, without having to regenerate a PCS root key every time, thereby improving system efficiency.

As yet another optional embodiment, the method further includes:
generating a message authentication code (MAC) for integrity protection of PCS root key generation information, by using the PCS root key or a derived key of the PCS root key;
where the relay key response message further includes: the message authentication code; or, the relay key response message further includes: the message authentication code and a parameter required for generating the message authentication code.

It is to be noted that if the relay key request message includes the identifier of the PCS root key, it indicates that the remote terminal already has a PCS root key. Regarding how the remote terminal owns a PCS root key, one embodiment of the present disclosure provides the following two ways.

First way: in case that the remote terminal cannot be directly connected to the network, the remote terminal transmits, to the relay terminal, a direct communication key request message which does not include an identifier of a PCS root key; the relay terminal transmits, to the AUSF, a relay key request message which does not include an identifier of a PCS root key, through a target network element; and the AUSF generates for the remote terminal, a PCS root key and an identifier of the PCS root key, and transmits the PCS root key and the identifier of the PCS root key to the remote terminal through PCS root key generation information.

Second way: in case that the remote terminal can be directly connected to the network, the remote terminal obtains a PCS root key and an identifier of the PCS root key in advance through a network element which the remote terminal accesses.

For the second way, the method includes:
receiving, by the AUSF, a PCS root key request message transmitted by the remote terminal through a network element which the remote terminal accesses (for example, the AMF of the remote terminal);
performing, by the AUSF, an authorization check on the remote terminal according to the PCS root key request message;
in case of determining that the remote terminal is an authorized remote terminal, generating, by the AUSF, a PCS root key and an identifier of the PCS root key based on an AUSF key of the remote terminal;
transmitting, by the AUSF, a PCS root key response message to the remote terminal through the network element which the remote terminal accesses; where the PCS root key response message includes the PCS root key generation information, and the PCS root key generation information includes a parameter required for generating the PCS root key and the identifier of the PCS root key.

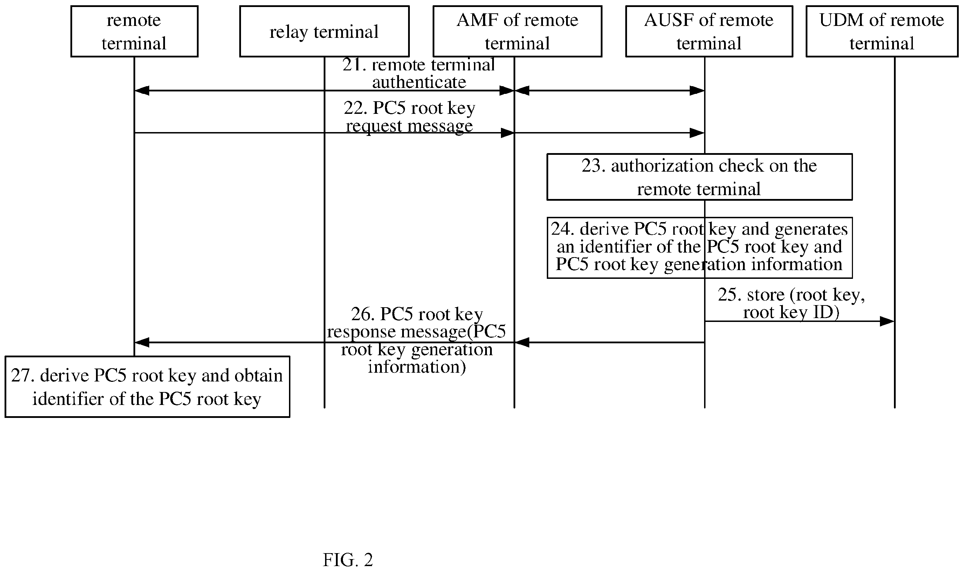

As shown in FIG. 2, one procedure for a remote terminal to obtain a PCS root key and an identifier of the PCS root key in advance is as follows.

At step 21, a remote terminal registers and authenticates to the network.

At step 22, the remote terminal transmits a PCS root key request message to an AUSF of the remote terminal through an AMF of the remote terminal; where the PCS root key request message may include GUTI or SUCI of the remote terminal, and the AUSF may obtain SUPI of the remote terminal according to the GUTI or SUCI of the remote terminal.

At step 23, the AUSF performs an authorization check on the remote terminal according to the SUPI of the remote terminal.

At step 24, in case that the AUSF determines that the remote terminal is an authorized terminal, the AUSF derives the PCS root key according to an AUSF key of the remote terminal, and generates an identifier of the PCS root key and PCS root key generation information.

At step 25, the AUSF stores the PCS root key and the identifier of the PCS root key to the UDM of the remote terminal.

At step 26, the AUSF transmits a PCS root key response message to the remote terminal through the AMF of the remote terminal, where the PCS root key response message includes the PCS root key generation information.

At step 27, the remote terminal derives and stores the PCS root key and the identifier of the PCS root key according to the PCS root key generation information.

In at least one embodiment of the present disclosure, the step 102 includes:
performing, by the AUSF, an authorization check on the remote terminal according to the relay key request message;
in case of determining that the remote terminal is an authorized remote terminal, obtaining, by the AUSF, the PCS root key of the remote terminal;
where the relay key request message includes: a subscription permanent identifier (SUPI) of the remote terminal, or a subscription concealed identifier (SUCI) of the remote terminal.

Specifically, the AUSF determines the SUPI (i.e., a subscription permanent identifier of a SIM card) of the remote terminal according to the relay key request message; and the AUSF performs an authorization check on the remote terminal according to the SUPI of the remote terminal.

In case that the relay request message includes SUCI, one way for the AUSF to determine the SUPI of the remote terminal includes that the AUSF of the remote terminal requests an authentication vector (AV) from the UDM, and the UDM returns an AV and the SUPI of the remote terminal.

In case that the relay request message includes the SUPI of the remote terminal, the SUPI of the remote terminal is obtained by a target network element of a relay terminal according to a globally unique temporary UE identity (GUTI) of the remote terminal.

It is to be noted that in case that the remote terminal provides the SUCI of the remote terminal, the AUSF of the remote terminal, the AMF of the relay terminal and the remote terminal need to perform a primary authentication process through the relay terminal, which will be described in detail here.

To sum up, in the embodiment of the present disclosure, the PCS root key is generated by the AUSF of the remote terminal, that is, after the AUSF completes authentication of the remote terminal, the AUSF generates the PCS root key by using the AUSF key of the remote terminal, which is in line with the positioning of the AUSF in the 5G system. The PCS root key generated by the AUSF is stored in the UDM, and the entity that needs the PCS root key can use the identifier of the PCS root key to obtain the PCS root key through the AUSF, without having to regenerate a PCS root key every time, thereby improving system efficiency.

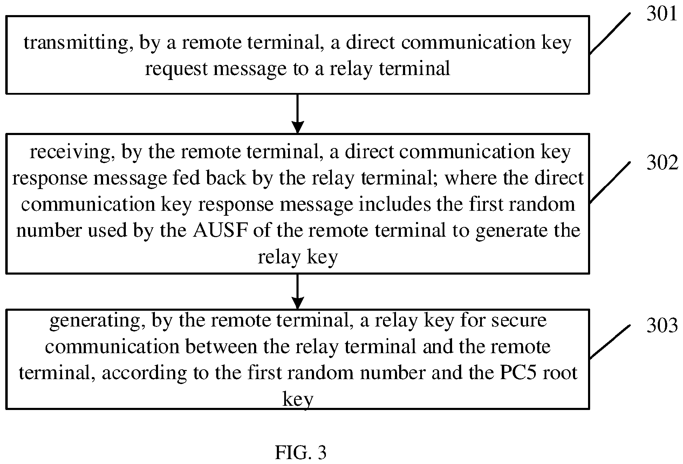

As shown in FIG. 3, one embodiment of the present disclosure further provides a PCS root key processing method. The method includes the following steps.

Step 301: transmitting, by a remote terminal, a direct communication key request message to a relay terminal.

In this step, in case that the remote terminal needs to perform PCS communication with the relay terminal, the remote terminal transmits a direct communication key request message to the relay terminal; and the relay terminal that receives the direct communication key request message, transmits a relay key request message to an AUSF through a target network which the relay terminal accesses. The AUSF obtains a PCS root key of the remote terminal according to the relay key request message. The AUSF generates a first random number, and generates a relay key for secure communication between the relay terminal and the remote terminal, according to the first random number and the PCS root key.

Step 302: receiving, by the remote terminal, a direct communication key response message fed back by the relay terminal; where the direct communication key response message includes the first random number used by the AUSF of the remote terminal to generate the relay key.

In this step, after the relay terminal receives the relay key response message, the relay terminal transmits the first random number used for generating the relay key to the remote terminal through the direct communication key response message. The direct communication key response message is a direct security mode command.

Step 303: generating, by the remote terminal, a relay key for secure communication between the relay terminal and the remote terminal, according to the first random number and the PCS root key.

Further, the relay terminal may also generate a fourth random number, and transmit the fourth random number to the remote terminal by carrying the fourth random number in the direct communication key response message. The relay terminal can use the relay key, the fourth random number and a third random number generated by the remote terminal to generate a session key, and uses the session key to protect a direct security mode command message. The remote terminal also uses the relay key, the fourth random number and the third random number generated by the remote terminal to generate a session key, and uses the session key to protect a direct security mode complete message. Finally, the remote terminal and the relay terminal use the negotiated session key to communicate securely.

In at least one embodiment of the present disclosure, if the remote terminal already has a PCS root key, the direct communication key request message may carry an identifier (PCS key ID) of the PCS root key, correspondingly, the relay key request message carries the identifier of the PCS root key; if the remote terminal does not have the PCS root key, the direct communication key request message cannot carry the identifier of the PCS root key, correspondingly, the relay key request message also cannot carry the identifier of the PCS root key.

As an optional embodiment, in case that the remote terminal stores the PCS root key and the identifier of the PCS root key, the direct communication key request message includes the identifier of the PCS root key.

In this case, when the remote terminal generates the relay key in the step 303, the PCS root key locally stored by the remote terminal is used.

As another optional embodiment, in case that the remote terminal does not store the PCS root key and the identifier of the PCS root key, the direct communication key response message further includes PCS root key generation information. The PCS root key generation information includes a parameter required for generating the PCS root key and the identifier of the PCS root key.

The method further includes:
generating, by the remote terminal, the PCS root key, according to an AUSF key of the remote terminal and the parameter required for generating the PCS root key.

In this case, when the remote terminal generates the relay key in the step 303, the PCS root key generated by the remote terminal according to the AUSF key and the parameter required for generating the PCS root key transmitted by the AUSF, is used.

For example, the parameter required for generating the PCS root key includes: a second random number used by the AUSF to generate the PCS root key.

Optionally, the remote terminal generates the PCS root key in the same way as AUSF, for example:
generating a PCS root key according to an AUSF key of the remote terminal and a second random number generated by the AUSF;
   or,
generating a PCS root key according to an AUSF key of the remote terminal, a second random number generated by the AUSF and a third random number generated by the remote terminal.

As yet another optional embodiment, the relay key response message further includes a message authentication code (MAC), or, the relay key response message further includes: the message authentication code and a parameter required for generating the message authentication code. The message authentication code is used for integrity protection of the PCS root key generation information. The remote terminal uses the message authentication code to verify the integrity of the PCS root key generation information. On the premise of confirming the integrity, the remote terminal generates the PCS root key according to the AUSF key of the remote terminal and the parameter required for generating the PCS root key.

It is to be noted that if the relay key request message includes the identifier of the PCS root key, it indicates that the remote terminal already has a PCS root key. Regarding how the remote terminal owns a PCS root key, one embodiment of the present disclosure provides the following two ways.

First way: in case that the remote terminal cannot be directly connected to the network, the remote terminal transmits, to the relay terminal, a direct communication key request message which does not include an identifier of a PCS root key; the relay terminal transmits, to the AUSF, a relay key request message which does not include an identifier of a PCS root key, through a target network element; and the AUSF generates for the remote terminal, a PCS root key and an identifier of the PCS root key, and transmits the PCS root key and the identifier of the PCS root key to the remote terminal through PCS root key generation information.

Second way: in case that the remote terminal can be directly connected to the network, the remote terminal obtains a PCS root key and an identifier of the PCS root key in advance through a network element which the remote terminal accesses. The specific process is shown in FIG. 2, which will not be repeated here.

For the second way, in case that the remote terminal stores the PCS root key and the identifier of the PCS root key, before the step 301, the method further includes:
transmitting, by the remote terminal, a PCS root key request message, to an AUSF of the remote terminal, through a network element which the remote terminal accesses;
receiving, by the remote terminal, a PCS root key response message fed back by the AUSF through the network element which the remote terminal accesses; where the PCS root key response message includes the PCS root key generation information, and the PCS root key generation information includes a parameter required for generating the PCS root key and the identifier of the PCS root key;
generating, by the remote terminal, the PCS root key according to the AUSF key of the remote terminal and the parameter required for generating the PCS root key.

As an optional embodiment, the direct communication key request message includes SUCI of the remote terminal, or a globally unique temporary UE identity (GUTI) of the remote terminal.

In case that the direct communication key request message includes the GUTI of the remote terminal, the SUPI of the remote terminal is obtained by the target network element of the relay terminal according to the GUTI of the remote terminal.

In case that the direct communication key request message includes the SUCI of the remote terminal, the AUSF of the remote terminal requests an authentication vector (AV) from the UDM, and the UDM returns an AV and the SUPI of the remote terminal. Further, in case that the remote terminal provides the SUCI of the remote terminal, the AUSF of the remote terminal, the AMF of the relay terminal and the remote terminal need to perform a primary authentication process through the relay terminal, which will be described in detail here.

To sum up, in the embodiment of the present disclosure, the PCS root key is generated by the AUSF of the remote terminal, that is, after the AUSF completes authentication of the remote terminal, the AUSF generates the PCS root key by using the AUSF key of the remote terminal, which is in line with the positioning of the AUSF in the 5G system. The PCS root key generated by the AUSF is stored in the UDM, and the entity that needs the PCS root key can use the identifier of the PCS root key to obtain the PCS root key through the AUSF, without having to regenerate a PCS root key every time, thereby improving system efficiency.

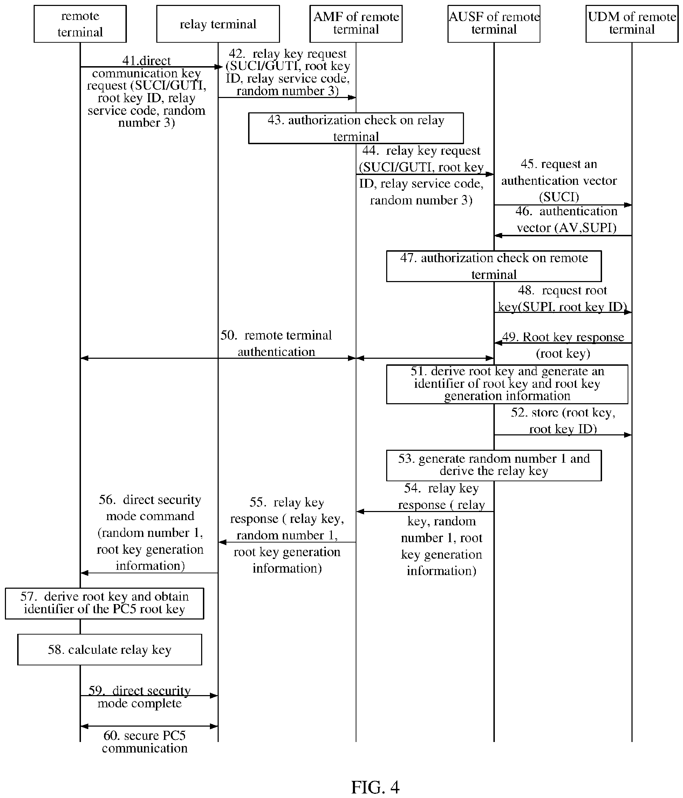

In order to more clearly describe the PCS root key processing method according to the embodiment of the present disclosure, one process of obtaining the PCS root key is described hereinafter in conjunction with an application example shown in FIG. 4.

At step 41, a remote terminal generates a random number 3, and then transmits a direct communication key request to a relay terminal. The request includes: SUCI or GUTI. Optionally, the request further includes: an identifier of a PCS root key (PCS Key ID), a relay service code, and the random number 3. In case that the remote terminal has registered to the network, the request includes a globally unique temporary UE identity (GUTI), otherwise, the request includes a subscription concealed identifier (SUCI); in case that the remote terminal already has a PCS root key, the request includes an identifier of the PCS root key (PCS Key ID).

At step 42, the relay terminal transmits a relay key request to AMF of the relay terminal (or the relay terminal transmits the relay key request to the AMF through PKMF). The request includes the SUCI or GUTI provided by the remote terminal. Optionally, the request further includes: the PCS Key ID, the relay service code, and the random number 3. The relay key is used to establish a secure one-to-one direct communication between the remote terminal and the relay terminal.

At step 43, the AMF (or PKMF) of the relay terminal checks whether the relay terminal is authorized as a relay UE. In case that the relay terminal is authorized as a relay terminal, the AMF continues to perform the following operations.

At step 44, in case that the remote terminal provides the GUTI, the AMF of the relay terminal obtains the corresponding SUPI based on the GUTI. The AMF of the relay terminal transmits a relay key request to the AUSF of the remote terminal. The request includes the SUCI provided by the remote terminal or the SUPI obtained by the AMF. Optionally, the request further includes a relay key ID, the relay service code, and the random number 3.

At step 45, in case that the relay key request includes SUCI, the AUSF of the remote terminal requests an authentication vector (AV) from the UDM of the remote terminal.

At step 46, the UDM of the remote terminal returns an AV and the SUPI of the remote terminal.

At step 47, the AUSF of the remote terminal checks whether the remote terminal is authorized as a remote terminal based on the SUPI of the remote terminal. In case that the remote terminal is authorized as a remote terminal, the following operations are performed.

At step 48, in case that the remote terminal provides the PCS Key ID, the AUSF of the remote terminal requests the PCS root key from the UDM with a request message including SUPI and PCS Key ID.

At step 49, the UDM obtains a specified PCS root key and returns it to the AUSF.

At step 50, in case that the remote terminal provides SUCI, the AUSF of the remote terminal, the AMF of the relay terminal and the remote terminal perform a primary authentication process through the relay terminal.

At step 51, in case that the remote terminal does not provide the PCS Key ID, or the network determines to update the PCS root key of the remote terminal, the AUSF of the remote terminal uses a key Kausf of the remote terminal to derive a new PCS root key. The AUSF generates a new root key identifier PCS Key ID for the PCS root key. The AUSF generates PCS root key generation information (PCS Key Info). The PCS root key generation information provides a parameter required for generating a new PCS Key, such as a random number generated by AUSF to generate the PCS root key. The generation of this key may also use information from the remote terminal, such as the random number 3. Optionally, the PCS root key generation information may also be integrity protected, such as using a newly generated root key or its derived key to generate a message authentication code (MAC). At this point, information for indicating how to generate the MAC and the MAC itself are transmitted to the remote terminal.

At step 52, the AUSF of the remote terminal stores the newly generated PCS root key and PCS Key ID in the UDM.

At step 53, the AUSF of the remote terminal generates a random number 1 (Relay Key Freshness) for generating a relay key; and the AUSF of the remote terminal derives the relay key by using the PCS root key, the random number 1 and other parameters, such as the random number 3, the relay service code.

At step 54, the AUSF of the remote terminal transmits the relay key, the random number 1, and PCS Key Info (if exists) to the AMF of the relay terminal.

At step 55, the AMF of the relay terminal transmits the relay key, the random number 1, and PCS Key Info (if exists) to the relay terminal.

At step 56, the relay terminal generates a random number 4, and transmits the random number 1, the random number 4 and PCS Key Info (if exists) to the remote terminal through a direct security mode command. The relay terminal can use the relay key, the random number 3, the random number 4 and other parameters to generate a session key, and use the session key to protect the direct security mode command message.

At step 57, in case that the message includes PCS Key Info, then the remote terminal uses the local key Kausf and the parameters in the PCS Key Info to derive the PCS root key in the same way as the AUSF, and obtains the identifier (PCS Key ID) of the PCS root key from the PCS Key Info. The remote terminal stores the PCS root key and PCS Key ID.

At step 58, the remote terminal uses the PCS root key, the random number 1 and other parameters to derive the relay key in the same way as the AUSF.

At step 59, the remote terminal transmits a direct security mode complete message to the relay terminal. The remote terminal can use the relay key, the random number 3, the random number 4 and other parameters to generate a session key, and use the session key to protect the direct security mode complete message.

At step 60, the remote terminal and the relay terminal use the negotiated session key to perform secure communication.

In the embodiment of the present disclosure, the PCS root key is generated by the AUSF of the remote terminal, that is, after the AUSF completes authentication of the remote terminal, the AUSF generates the PCS root key by using the AUSF key of the remote terminal, which is in line with the positioning of the AUSF in the 5G system. The PCS root key generated by the AUSF is stored in the UDM, and the entity that needs the PCS root key can use the identifier of the PCS root key to obtain the PCS root key through the AUSF, without having to regenerate a PCS root key every time, thereby improving system efficiency.

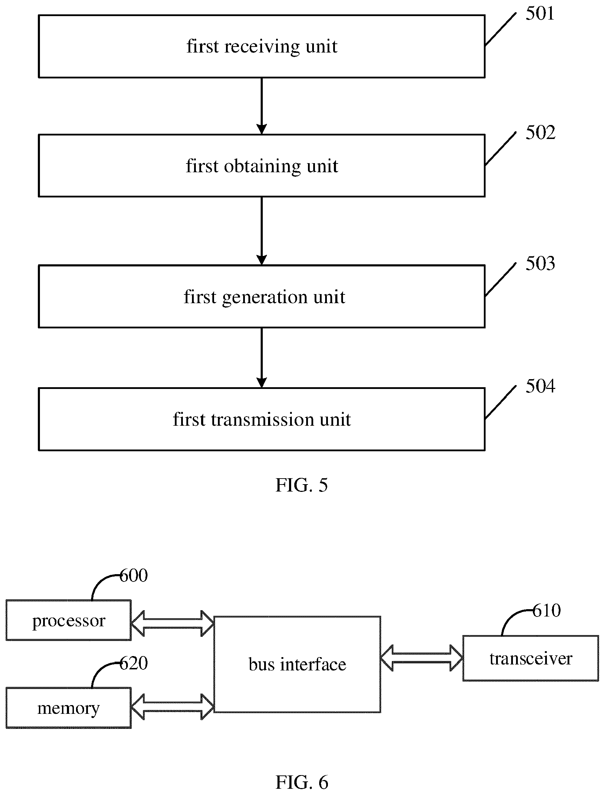

As shown in FIG. 5, one embodiment of the present disclosure further provides a PCS root key processing device, which is applied to an authentication server function (AUSF) of a remote terminal, including:
a first receiving unit 501 configured to receive a relay key request message transmitted by a relay terminal through a target network element of the relay terminal;
a first obtaining unit 502 configured to obtain a PCS root key of the remote terminal, according to the relay key request message;
a first generation unit 503 configured to generate a first random number, and generate a relay key for secure communication between the relay terminal and the remote terminal according to the first random number and the PCS root key;
a first transmission unit 504 configured to transmit a relay key response message to the relay terminal through the target network element of the relay terminal; where the relay key response message includes: the relay key and the first random number.

As an optional embodiment, in the case that the relay key request message includes the identifier of the PCS root key, the first obtaining unit includes:
a first subunit configured to transmit a first request message to a unified data management (UDM); where the first request message includes: SUPI of the remote terminal and an identifier of the PCS root key;
a second subunit configured to receive a first response message transmitted by the UDM; where the first response message includes: the PCS root key corresponding to the identifier of the PCS root key.

As an optional embodiment, in case that the relay key request message does not include the identifier of the PCS root key, or, the AUSF determines to update the PCS root key of the remote terminal, the first obtaining unit includes:
a third subunit configured to generate a PCS root key and an identifier of the PCS root key, based on an AUSF key of the remote terminal;
where the relay key response message further includes the identifier of the PCS root key.

As an optional embodiment, the device further includes:
a first storage unit configured to transmit the PCS root key and the identifier of the PCS root key to the UDM of the remote terminal for storage by the UDM of the remote terminal.

As an optional embodiment, the third subunit is further configured to,
generate a second random number, and generate a PCS root key and an identifier of the PCS root key according to the second random number and the AUSF key of the remote terminal;
   or,
generate a second random number, and generate a PCS root key and an identifier of the PCS root key according to the second random number, the AUSF key of the remote terminal and a third random number generated by the remote terminal.

As an optional embodiment, the device further includes:
a third generation unit configured to generate a message authentication code (MAC) for integrity protection of PCS root key generation information, by using the PCS root key or a derived key of the PCS root key;
where the relay key response message further includes: the message authentication code; or, the relay key response message further includes: the message authentication code and a parameter required for generating the message authentication code.

As an optional embodiment, in case that the relay key request message includes the identifier of the PCS root key, the device includes:
a third receiving unit configured to receive a PCS root key request message transmitted by the remote terminal through a network element which the remote terminal accesses;
a first checking unit configured to perform an authorization check on the remote terminal according to the PCS root key request message;
a fourth generation unit configured to, in case of determining that the remote terminal is an authorized remote terminal, generate a PCS root key and an identifier of the PCS root key based on an AUSF key of the remote terminal;
a third transmission unit configured to transmit a PCS root key response message to the remote terminal through the network element which the remote terminal accesses; where the PCS root key response message includes the PCS root key generation information, and the PCS root key generation information includes a parameter required for generating the PCS root key and the identifier of the PCS root key.

As an optional embodiment, the first obtaining includes:
a second checking subunit configured to perform an authorization check on the remote terminal according to the relay key request message;
an obtaining subunit configured to obtain the PCS root key of the remote terminal in case of determining that the remote terminal is an authorized remote terminal.

As an optional embodiment, the relay key request message includes: a subscription permanent identifier (SUPI) of the remote terminal, or a subscription concealed identifier (SUCI) of the remote terminal.

In the embodiment of the present disclosure, the PCS root key is generated by the AUSF of the remote terminal, that is, after the AUSF completes authentication of the remote terminal, the AUSF generates the PCS root key by using the AUSF key of the remote terminal, which is in line with the positioning of the AUSF in the 5G system. The PCS root key generated by the AUSF is stored in the UDM, and the entity that needs the PCS root key can use the identifier of the PCS root key to obtain the PCS root key through the AUSF, without having to regenerate a PCS root key every time, thereby improving system efficiency.

The method and the device are based on the same concept. Since principles of the method and the device for solving the problems are similar, implementation of the device and the method can be referred to each other, and duplication is not repeated.

As shown in FIG. 6, one embodiment of the present disclosure further provides an authentication server function (AUSF), which includes: a memory 620, a transceiver 610 and a processor 600. The memory 620 is used to store a computer program. The transceiver 610 is used to transmit and receive data under the control of the processor 600. The processor 600 is used to read the computer program in the memory 620 and perform the following operations:
receiving a relay key request message transmitted by a relay terminal through a target network element of the relay terminal;
obtaining a PCS root key of the remote terminal, according to the relay key request message;
generating a first random number, and generating a relay key for secure communication between the relay terminal and the remote terminal according to the first random number and the PCS root key;
transmitting a relay key response message to the relay terminal through the target network element of the relay terminal; where the relay key response message includes: the relay key and the first random number.

As an optional embodiment, in the case that the relay key request message includes the identifier of the PCS root key, the processor 600 is further configured to read the computer program in the memory 620 and perform the following operations:
transmitting a first request message to a unified data management (UDM); where the first request message includes: SUPI of the remote terminal and an identifier of the PCS root key;
receiving a first response message transmitted by the UDM; where the first response message includes: the PCS root key corresponding to the identifier of the PCS root key.

As an optional embodiment, in case that the relay key request message does not include the identifier of the PCS root key, or, the AUSF determines to update the PCS root key of the remote terminal, the processor 600 is further configured to read the computer program in the memory 620 and perform the following operations:
generating a PCS root key and an identifier of the PCS root key, based on an AUSF key of the remote terminal;
where the relay key response message further includes PCS root key generation information, and the PCS root key generation information includes a parameter required for generating the PCS root key and the identifier of the PCS root key.

As an optional embodiment, after the AUSF generates a PCS root key and an identifier of the PCS root key, based on an AUSF key of the remote terminal, the processor 600 is further configured to read the computer program in the memory 620 and perform the following operations:
transmitting the PCS root key and the identifier of the PCS root key to the UDM of the remote terminal for storage by the UDM of the remote terminal.

As an optional embodiment, the processor 600 is further configured to read the computer program in the memory 620 and perform the following operations:
generating a second random number, and generating a PCS root key and an identifier of the PCS root key according to the second random number and the AUSF key of the remote terminal;
   or,
generating a second random number, and generating a PCS root key and an identifier of the PCS root key according to the second random number, the AUSF key of the remote terminal and a third random number generated by the remote terminal.

As an optional embodiment, the processor 600 is further configured to read the computer program in the memory 620 and perform the following operations:
generating a message authentication code (MAC) for integrity protection of PCS root key generation information, by using the PCS root key or a derived key of the PCS root key;
where the relay key response message further includes: the message authentication code; or, the relay key response message further includes: the message authentication code and a parameter required for generating the message authentication code.

As an optional embodiment, in case that the relay key request message includes the identifier of the PCS root key, the processor 600 is further configured to read the computer program in the memory 620 and perform the following operations:
receiving a PCS root key request message transmitted by the remote terminal through a network element which the remote terminal accesses;
performing an authorization check on the remote terminal according to the PCS root key request message;
in case of determining that the remote terminal is an authorized remote terminal, generating a PCS root key and an identifier of the PCS root key based on an AUSF key of the remote terminal;
transmitting a PCS root key response message to the remote terminal through the network element which the remote terminal accesses; where the PCS root key response message includes the PCS root key generation information, and the PCS root key generation information includes a parameter required for generating the PCS root key and the identifier of the PCS root key.

As an optional embodiment, the processor 600 is further configured to read the computer program in the memory 620 and perform the following operations:
performing an authorization check on the remote terminal according to the relay key request message;
obtaining the PCS root key of the remote terminal in case of determining that the remote terminal is an authorized remote terminal.

As an optional embodiment, the relay key request message includes: a subscription permanent identifier (SUPI) of the remote terminal, or a subscription concealed identifier (SUCI) of the remote terminal.

In FIG. 6, a bus architecture may include any number of interconnected bus and bridge. Specifically, various circuits of one or more processors, which are represented by the processor 600, and one or more memories, which are represented by the memory 620, are linked together. The bus architecture may link various other circuits, such as a peripheral device, voltage regulator and a power management circuit together. These features are well known in this field; therefore, this disclosure does not make further description on these features. The first bus interface provides an interface. The transceiver 610 may be multiple elements, including a transmitter and a receiver and provide units, which communicate with other devices on the transmission medium. The transmission medium includes wireless channels, wired channels, and optical cables. The processor 600 is responsible for managing the bus architecture and the normal processing. The memory 620 may be used to store data used by the processor 600 for performing operations.

Optionally, the processor 600 may be a central processing unit (CPU), an application specific integrated circuit (ASIC), a field-programmable gate array (FPGA) or a complex programmable logic device (CPLD). The processor may also adopt multi-core architecture.

In the embodiment of the present disclosure, the PCS root key is generated by the AUSF of the remote terminal, that is, after the AUSF completes authentication of the remote terminal, the AUSF generates the PCS root key by using the AUSF key of the remote terminal, which is in line with the positioning of the AUSF in the 5G system. The PCS root key generated by the AUSF is stored in the UDM, and the entity that needs the PCS root key can use the identifier of the PCS root key to obtain the PCS root key through the AUSF, without having to regenerate a PCS root key every time, thereby improving system efficiency.

It is to be noted here that the foregoing AUSF provided in the embodiments of the present disclosure is an AUSF which can implement the above PCS root key processing method, and then all embodiment of the above PCS root key processing method are applicable to the AUSF and can achieve the same or similar beneficial effects.

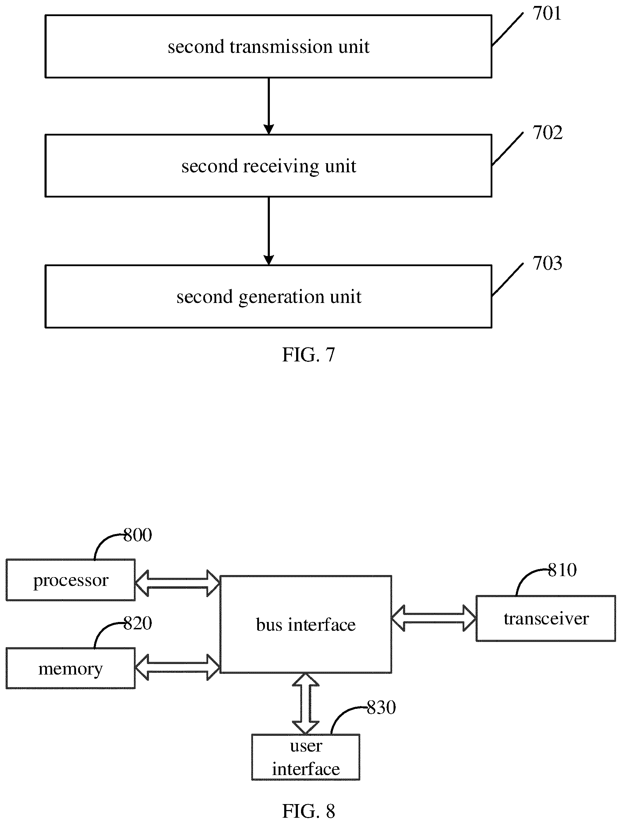

As shown in FIG. 7, one embodiment of the present disclosure further provides a PCS root key processing device, which is applied to a remote terminal, including:
a second transmission unit 701 configured to transmit a direct communication key request message to a relay terminal;
a second receiving unit 702 configured to receive a direct communication key response message fed back by the relay terminal; where the direct communication key response message includes a first random number used by the AUSF of the remote terminal to generate the relay key;
a second generation unit 703 configured to generate a relay key for secure communication between the relay terminal and the remote terminal, according to the first random number and the PCS root key.

As an optional embodiment, in case that the remote terminal stores the PCS root key and the identifier of the PCS root key, the direct communication key request message includes the identifier of the PCS root key.

As another optional embodiment, in case that the remote terminal does not store the PCS root key and the identifier of the PCS root key, the direct communication key response message further includes PCS root key generation information. The PCS root key generation information includes a parameter required for generating the PCS root key and the identifier of the PCS root key.

The device further includes:
a fifth generation unit configured to generate the PCS root key, according to an AUSF key of the remote terminal and the parameter required for generating the PCS root key.

As an optional embodiment, the parameter required for generating the PCS root key includes: a second random number used by the AUSF to generate the PCS root key.

The fifth generation unit is further configured to,
generate a PCS root key according to an AUSF key of the remote terminal and the second random number;
   or,
generate a PCS root key according to an AUSF key of the remote terminal, the second random number and a third random number generated by the remote terminal.

As an optional embodiment, the relay key response message further includes a message authentication code (MAC), or, the relay key response message further includes: the message authentication code and a parameter required for generating the message authentication code. The message authentication code is used for integrity protection of the PCS root key generation information.

As an optional embodiment, in case that the remote terminal stores the PCS root key and the identifier of the PCS root key, before the remote terminal transmits the direct communication key request message to the relay terminal, the device further includes:
a third transmission unit configured to transmit a PCS root key request message to an AUSF of the remote terminal, through a network element which the remote terminal accesses;
a sixth receiving unit configured to receive a PCS root key response message fed back by the AUSF through the network element which the remote terminal accesses; where the PCS root key response message includes the PCS root key generation information, and the PCS root key generation information includes a parameter required for generating the PCS root key and the identifier of the PCS root key;
a sixth generation unit configured to generate the PCS root key according to the AUSF key of the remote terminal and the parameter required for generating the PCS root key.

As an optional embodiment, the direct communication key request message includes SUCI of the remote terminal, or a globally unique temporary UE identity (GUTI) of the remote terminal.

In the embodiment of the present disclosure, the PCS root key is generated by the AUSF of the remote terminal, that is, after the AUSF completes authentication of the remote terminal, the AUSF generates the PCS root key by using the AUSF key of the remote terminal, which is in line with the positioning of the AUSF in the 5G system. The PCS root key generated by the AUSF is stored in the UDM, and the entity that needs the PCS root key can use the identifier of the PCS root key to obtain the PCS root key through the AUSF, without having to regenerate a PCS root key every time, thereby improving system efficiency.

The method and the device are based on the same concept. Since principles of the method and the device for solving the problems are similar, implementation of the device and the method can be referred to each other, and duplication is not repeated.

As shown in FIG. 8, one embodiment of the present disclosure further provides a remote terminal, which includes: a memory 820, a transceiver 810 and a processor 800. The memory 820 is used to store a computer program. The transceiver 810 is used to transmit and receive data under the control of the processor 800. The processor 800 is used to read the computer program in the memory 820 and perform the following operations:
transmitting a direct communication key request message to a relay terminal;
receiving a direct communication key response message fed back by the relay terminal; where the direct communication key response message includes a first random number used by the AUSF of the remote terminal to generate the relay key;
generating a relay key for secure communication between the relay terminal and the remote terminal, according to the first random number and the PCS root key.

As an optional embodiment, in case that the remote terminal stores the PCS root key and the identifier of the PCS root key, the direct communication key request message includes the identifier of the PCS root key.

As another optional embodiment, in case that the remote terminal does not store the PCS root key and the identifier of the PCS root key, the direct communication key response message further includes PCS root key generation information. The PCS root key generation information includes a parameter required for generating the PCS root key and the identifier of the PCS root key. The processor 800 is used to read the computer program in the memory 820 and perform the following operations:
generating the PCS root key, according to an AUSF key of the remote terminal and the parameter required for generating the PCS root key.

As an optional embodiment, the parameter required for generating the PCS root key includes: a second random number used by the AUSF to generate the PCS root key. The processor 800 is used to read the computer program in the memory 820 and perform the following operations:
generating a PCS root key according to an AUSF key of the remote terminal and the second random number;
   or,
generating a PCS root key according to an AUSF key of the remote terminal, the second random number and a third random number generated by the remote terminal.

As an optional embodiment, the relay key response message further includes a message authentication code (MAC), or, the relay key response message further includes: the message authentication code and a parameter required for generating the message authentication code. The message authentication code is used for integrity protection of the PCS root key generation information.

As an optional embodiment, in case that the remote terminal stores the PCS root key and the identifier of the PCS root key, before the remote terminal transmits the direct communication key request message to the relay terminal, the processor 800 is used to read the computer program in the memory 820 and perform the following operations:
transmitting a PCS root key request message to an AUSF of the remote terminal, through a network element which the remote terminal accesses;
receiving a PCS root key response message fed back by the AUSF through the network element which the remote terminal accesses; where the PCS root key response message includes the PCS root key generation information, and the PCS root key generation information includes a parameter required for generating the PCS root key and the identifier of the PCS root key;
generating the PCS root key according to the AUSF key of the remote terminal and the parameter required for generating the PCS root key.

As an optional embodiment, the direct communication key request message includes SUCI of the remote terminal, or a globally unique temporary UE identity (GUTI) of the remote terminal.

In FIG. 8, a bus architecture may include any number of interconnected bus and bridge. Specifically, various circuits of one or more processors, which are represented by the processor 800, and one or more memories, which are represented by the memory 820, are linked together. The bus architecture may link various other circuits, such as a peripheral device, voltage regulator and a power management circuit together. These features are well known in this field; therefore, this disclosure does not make further description on these features. The first bus interface provides an interface. The transceiver 810 may be multiple elements, including a transmitter and a receiver and provide units, which communicate with other devices on the transmission medium. The transmission medium includes wireless channels, wired channels, and optical cables. For different terminals, a user interface 830 may also be an interface capable of externally connecting required devices, and the connected devices include but are not limited to keypads, displays, speakers, microphones, joysticks, etc.

The processor 800 is responsible for managing the bus architecture and the normal processing. The memory 820 may be used to store data used by the processor 800 for performing operations.

Optionally, the processor 800 may be a central processing unit (CPU), an application specific integrated circuit (ASIC), a field-programmable gate array (FPGA) or a complex programmable logic device (CPLD). The processor may also adopt multi-core architecture.

The processor is used to call the computer program stored in the memory, and execute any method provided in the embodiments of the present disclosure according to obtained executable instructions. The processor and the memory may also be physically separated.

In the embodiment of the present disclosure, the PCS root key is generated by the AUSF of the remote terminal, that is, after the AUSF completes authentication of the remote terminal, the AUSF generates the PCS root key by using the AUSF key of the remote terminal, which is in line with the positioning of the AUSF in the 5G system. The PCS root key generated by the AUSF is stored in the UDM, and the entity that needs the PCS root key can use the identifier of the PCS root key to obtain the PCS root key through the AUSF, without having to regenerate a PCS root key every time, thereby improving system efficiency.

It is to be noted here that the foregoing remote terminal provided in the embodiments of the present disclosure is a remote terminal which can implement the above PCS root key processing method, and then all embodiment of the above PCS root key processing method are applicable to the remote terminal and can achieve the same or similar beneficial effects.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

One embodiment of the present disclosure further provides a processor-readable storage medium. The processor-readable storage medium stores a computer program. The computer program is configured to cause the processor to execute the above method. The processor-readable storage medium may be any available medium or data storage device that can be accessed by a processor, including but not limited to magnetic storage (such as floppy disk, hard disk, magnetic tape, magneto-optical disk (MO)), optical storage (such as CD, DVD, BD, HVD), and semiconductor memory (such as ROM, EPROM, EEPROM, non-volatile memory (Nand flash), solid-state drive (SSD)).

Those skilled in the art should understand that the embodiments of the present application may be provided as methods, systems, or computer program products. Accordingly, in this application, an entirely hardware embodiment, an entirely software embodiment, or an embodiment combining software and hardware aspects may be adopted. Further, this application may adopt the form of a computer program product implemented on one or more computer available storage media (including but not limited to disk memory and optical memory) including computer available program codes.

The present disclosure has been described with reference to the flow charts and/or block diagrams of the method, device (system) and computer program product according to the embodiments of the present disclosure. It should be understood that computer program instructions may be used to implement each of the work flows and /or blocks in the flow charts and/or the block diagrams, and the combination of the work flows and/or blocks in the flow charts and/or the block diagrams. These computer program instructions may be provided to a processor of a common computer, a dedicate computer, an embedded processor or any other programmable data processing devices to create a machine, so that instructions executable by the processor of the computer or the other programmable data processing devices may create a device to achieve the functions assigned in one or more work flows in the flow chart and/or one or more blocks in the block diagram.

These processor-executable instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These processor-executable instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

Obviously, persons having ordinary skill in the art may make various modifications and variations to the present application without departing from the spirit and scope of the present application. In this way, if these modifications and variations of the present application fall within the scope of the claims of the present application and their equivalent technologies, the present application is also intended to include these modifications and variations.

## Claims

1. A PC5 root key processing method, comprising:
receiving, at an authentication server function (AUSF) of a remote terminal, a relay key request message transmitted by a relay terminal through a target network element of the relay terminal;
obtaining, by the AUSF, a PCS root key of the remote terminal, according to the relay key request message;
generating, by the AUSF, a first random number, and generating a relay key for secure communication between the relay terminal and the remote terminal according to the first random number and the PCS root key; and
transmitting, by the AUSF, a relay key response message to the relay terminal through the target network element of the relay terminal; wherein the relay key response message includes: the relay key and the first random number.

2. The method according to claim 1, wherein in case that the relay key request message includes an identifier of the PCS root key, the obtaining, by the AUSF, a PCS root key of the remote terminal, according to the relay key request message, includes:
transmitting, by the AUSF, a first request message to a unified data management (UDM); wherein the first request message includes: a subscription permanent identifier (SUPI) of the remote terminal and the identifier of the PCS root key;
receiving, by the AUSF, a first response message transmitted by the UDM; wherein the first response message includes: the PCS root key corresponding to the identifier of the PCS root key.

3. The method according to claim 1, wherein in case that the relay key request message does not include an identifier of the PCS root key, or, the AUSF determines to update the PCS root key of the remote terminal, the obtaining, by the AUSF, a PCS root key of the remote terminal, according to the relay key request message, includes:
generating, by the AUSF, the PCS root key and an identifier of the PCS root key, based on an AUSF key of the remote terminal;
wherein the relay key response message further includes the identifier of the PCS root key.

4. The method according to claim 3, wherein after generating, by the AUSF, the PCS root key and an identifier of the PCS root key, based on an AUSF key of the remote terminal, the method further includes:
transmitting, by the AUSF, the PCS root key and the identifier of the PCS root key to a unified data management (UDM) of the remote terminal for storage by the UDM of the remote terminal.

5. The method according to claim 3, wherein the generating, by the AUSF, the PCS root key and an identifier of the PCS root key, based on an AUSF key of the remote terminal, includes:
generating, by the AUSF, a second random number, and generating the PCS root key and the identifier of the PCS root key according to the second random number and the AUSF key of the remote terminal;
or,
generating, by the AUSF, a second random number, and generating the PCS root key and the identifier of the PCS root key according to the second random number, the AUSF key of the remote terminal and a third random number generated by the remote terminal.

6. The method according to claim 3, wherein the method further includes:
generating a message authentication code (MAC) for integrity protection of PCS root key generation information, by using the PCS root key or a derived key of the PCS root key;
wherein the relay key response message further includes: the message authentication code; or, the relay key response message further includes: the message authentication code and a parameter required for generating the message authentication code.

7. The method according to claim 2, wherein in case that the relay key request message includes the identifier of the PCS root key,
before receiving, at an authentication server function (AUSF) of a remote terminal, a relay key request message transmitted by a relay terminal through a target network element of the relay terminal, the method further includes:
receiving, by the AUSF, a PCS root key request message transmitted by the remote terminal through a network element which the remote terminal accesses;
performing, by the AUSF, an authorization check on the remote terminal according to the PCS root key request message;
in case of determining that the remote terminal is an authorized remote terminal, generating, by the AUSF, a PCS root key and an identifier of the PCS root key based on an AUSF key of the remote terminal;
transmitting, by the AUSF, a PCS root key response message to the remote terminal through the network element which the remote terminal accesses; wherein the PCS root key response message includes the PCS root key generation information, and the PCS root key generation information includes a parameter required for generating the PCS root key and the identifier of the PCS root key.

8. The method according to claim 1, wherein the obtaining, by the AUSF, a PCS root key of the remote terminal, according to the relay key request message, includes:
performing, by the AUSF, an authorization check on the remote terminal according to the relay key request message;
in case of determining that the remote terminal is an authorized remote terminal, obtaining, by the AUSF, the PCS root key of the remote terminal.

9. The method according to claim 1 or 8, wherein the relay key request message includes: a subscription permanent identifier (SUPI) of the remote terminal, or a subscription concealed identifier (SUCI) of the remote terminal.

10. A PC5 root key processing method, comprising:
transmitting, by a remote terminal, a direct communication key request message to a relay terminal;
receiving, by the remote terminal, a direct communication key response message fed back by the relay terminal; wherein the direct communication key response message includes a first random number used by an AUSF of the remote terminal to generate a relay key; and
generating, by the remote terminal, the relay key for secure communication between the relay terminal and the remote terminal, according to the first random number and the PCS root key.

11. The method according to claim 10, wherein in case that the remote terminal stores the PCS root key and an identifier of the PCS root key, the direct communication key request message includes the identifier of the PCS root key.

12. The method according to claim 10, wherein in case that the remote terminal does not store the PCS root key and an identifier of the PCS root key, the direct communication key response message further includes PCS root key generation information; the PCS root key generation information includes a parameter required for generating the PCS root key and the identifier of the PCS root key;
the method further includes:
generating, by the remote terminal, the PCS root key, according to an AUSF key of the remote terminal and the parameter required for generating the PCS root key.

13. The method according to claim 12, wherein the parameter required for generating the PCS root key includes: a second random number used by the AUSF to generate the PCS root key;
the generating, by the remote terminal, the PCS root key, according to an AUSF key of the remote terminal and the parameter required for generating the PCS root key, includes:
generating the PCS root key according to the AUSF key of the remote terminal and the second random number;
or,
generating the PCS root key according to the AUSF key of the remote terminal, the second random number and a third random number generated by the remote terminal.

14. The method according to claim 12, wherein the relay key response message further includes a message authentication code (MAC), or, the relay key response message further includes: the message authentication code and a parameter required for generating the message authentication code; the message authentication code is used for integrity protection of the PCS root key generation information.

15. The method according to claim 10, wherein in case that the remote terminal stores the PCS root key and an identifier of the PCS root key, before transmitting, by a remote terminal, a direct communication key request message to a relay terminal, the method further includes:
transmitting, by the remote terminal, a PCS root key request message, to an AUSF of the remote terminal, through a network element which the remote terminal accesses;
receiving, by the remote terminal, a PCS root key response message fed back by the AUSF through the network element which the remote terminal accesses; wherein the PCS root key response message includes PCS root key generation information, and the PCS root key generation information includes a parameter required for generating the PCS root key and the identifier of the PCS root key;
generating, by the remote terminal, the PCS root key according to the AUSF key of the remote terminal and the parameter required for generating the PCS root key.

16. The method according to claim 10, wherein the direct communication key request message includes SUCI of the remote terminal, or a globally unique temporary UE identity (GUTI) of the remote terminal.

17. A PC5 root key processing device, applied to an authentication server function (AUSF) of a remote terminal, comprising:
a first receiving unit configured to receive a relay key request message transmitted by a relay terminal through a target network element of the relay terminal;
a first obtaining unit configured to obtain a PCS root key of the remote terminal, according to the relay key request message;
a first generation unit configured to generate a first random number, and generate a relay key for secure communication between the relay terminal and the remote terminal according to the first random number and the PCS root key;
a first transmission unit configured to transmit a relay key response message to the relay terminal through the target network element of the relay terminal; wherein the relay key response message includes: the relay key and the first random number.

18. The device according to claim 17, wherein in case that the relay key request message does not include an identifier of the PCS root key, or, the AUSF determines to update the PCS root key of the remote terminal, the first obtaining unit includes:
a third subunit configured to generate the PCS root key and an identifier of the PCS root key, based on an AUSF key of the remote terminal;
wherein the relay key response message further includes the identifier of the PCS root key.

19. The device according to claim 17, wherein the relay key request message includes: a subscription permanent identifier (SUPI) of the remote terminal, or a subscription concealed identifier (SUCI) of the remote terminal.

20. An authentication server function (AUSF), comprising: a memory, a transceiver and a processor; wherein the memory is used to store a computer program, the transceiver is used to transmit and receive data under the control of the processor, and the processor is used to read the computer program in the memory and perform the following operations:
receiving a relay key request message transmitted by a relay terminal through a target network element of the relay terminal;
obtaining a PCS root key of the remote terminal, according to the relay key request message;
generating a first random number, and generating a relay key for secure communication between the relay terminal and the remote terminal according to the first random number and the PCS root key; and
transmitting a relay key response message to the relay terminal through the target network element of the relay terminal; wherein the relay key response message includes: the relay key and the first random number.

21. A PC5 root key processing device, applied to a remote terminal, comprising:
a second transmission unit configured to transmit a direct communication key request message to a relay terminal;
a second receiving unit configured to receive a direct communication key response message fed back by the relay terminal; wherein the direct communication key response message includes a first random number used by an AUSF of the remote terminal to generate a relay key;
a second generation unit configured to generate the relay key for secure communication between the relay terminal and the remote terminal, according to the first random number and the PCS root key.

22. The device according to claim 21, wherein the direct communication key request message includes SUCI of the remote terminal, or a globally unique temporary UE identity (GUTI) of the remote terminal.

23. A remote terminal, comprising: a memory, a transceiver and a processor; wherein the memory is used to store a computer program, the transceiver is used to transmit and receive data under the control of the processor, and the processor is used to read the computer program in the memory and perform the following operations:
transmitting a direct communication key request message to a relay terminal;
receiving a direct communication key response message fed back by the relay terminal; wherein the direct communication key response message includes a first random number used by an AUSF of the remote terminal to generate a relay key; and
generating the relay key for secure communication between the relay terminal and the remote terminal, according to the first random number and the PCS root key.

24. A processor-readable storage medium, comprising a computer program stored thereon; wherein the computer program is used to cause a processor to execute the method according to any one of claims 1 to 9, or, the computer program is used to cause a processor to execute the method according to any one of claims 10 to 16.
